# EUROPÄISCHE PATENTANMELDUNG

(11) **EP 1 235 337 A2**
(43) Veröffentlichungstag der Anmeldung: **28.08.2002**
(21) Anmeldenummer: 02100164.9
(22) Anmeldetag: 21.02.2002
(51) Int. Cl.: H02M 7/08

(54) **Schaltung zur Umwandlung von Wechselspannung in Gleichspannung**

(30) Priorität: 22.02.2001 DE 10108431
(71) Anmelder: Philips Corporate Intellectual Property GmbH, 52064 Aachen (DE); Koninklijke Philips Electronics N.V., 5621 BA Eindhoven (NL)
(72) Erfinder: Dürbaum, Thomas, Dr., 52066, Aachen (DE); Elferich, Reinhold, 52066, Aachen (DE); Sauerländer, Georg, 52066, Aachen (DE)
(74) Vertreter: Volmer, Georg, Dipl.-Ing.

(57) **Zusammenfassung**

Die Erfindung betrifft eine Schaltung zur Umwandlung von Wechselspannung in Gleichspannung für einen oder zwei Verbraucher (Rm, Ra), bei der ein erster Teil des Stromes über eine große Induktionsspule (L50) und einen ersten Gleichrichter (Gm) und ein zweiter Teil des Stromes über einen zweiten Gleichrichter (Ga) vor der großen Induktionsspule in der Eingangsseite zugeleitet wird Durch die Aufteilung des zugeführten Stromes kann die Induktionsspule (L50) zur Glättung der Ausgangsspannung entsprechend kleiner dimensioniert werden, und trotzdem kann die Schaltung gleichzeitig einschlägige Normvorschriften erfüllen.

## Beschreibung

Die Erfindung betrifft eine Schaltung zur Umwandlung von Wechselspannung in eine ungeregelte Gleichspannung für mindestens einen Verbraucher, enthaltend
- eine Wechselspannungseinspeisung mit zwei externen Anschlüssen und mindestens zwei internen Anschlüssen,
- ein Gleichrichtermodul, dessen zwei Eingänge mit je einem internen Anschluss der Wechselspannungseinspeisung verbunden sind und welches zwei Ausgangsleitungen mit Außenanschlüssen für die Ankopplung mindestens eines Verbrauchers aufweist,
- mindestens eine in wenigstens einer der Verbindungsleitungen zwischen den internen Anschlüssen der Wechselspannungseinspeisung und dem Gleichrichtermodul angeordnete Induktionsspule.

Eine Vielzahl von elektrischen oder elektronischen Geräten benötigt für ihren Betrieb eine Gleichspannung, welche aus der Wechselspannung des Stromversorgungsnetzes bereitgestellt beziehungsweise erzeugt werden muss. Stellvertretend für derartige Endgeräte sei ein Fernsehgerät (TV) genannt. Die in solchen Geräten eingesetzten Schaltungen zur Umwandlung der Wechselspannung in Gleichspannung müssen bestimmte Anforderungen hinsichtlich ihres Umwandlungsverhaltens, insbesondere hinsichtlich des verbleibenden Anteils von Netzharmonischen erfüllen. Derartige Anforderungsn sind nicht zuletzt Gegenstand von Normen, wobei diesbezüglich insbesondere die CEI/IEC 61000-3-2, SECOND EDITION, 2000-08 zu nennen ist, welche in Europa von Endgeräten, die mehr als 75 W Leistungsaufnahme aufweisen, ab dem Jahr 2001 zu erfüllen ist.

Zur Gewährleistung der Einhaltung der genannten Qualitätsnormen gibt es verschiedene Möglichkeiten mit verschiedenen optimalen Leistungsbereichen. Für große Leistungen ab ca. 500 W überwiegen aktive Lösungen. Im kleineren Leistungsbereich findet man dagegen häufig 50 Hz-Spulen. Diese sind verhältnismäßig preiswert, jedoch auch verhältnismäßig groß und schwer. Diese Größe bzw. diese konzentrierten Massen führen zu Problemen mit dem verfügbaren Platz auf gedruckten Leiterplatten bzw. zu Problemen bei der Stoßfestigkeit der hergestellten Geräte.

Vor diesem Hintergrund war es Aufgabe der vorliegenden Erfindung, eine Schaltung zur Umwandlung von Wechselspannung in Gleichspannung für mindestens einen Verbraucher bereitzustellen, welche eine ausreichende Qualität des Umwandlungsverhaltens bei begrenztem Platz- und Kostenaufwand gewährleistet.

Diese Aufgabe wird durch eine Schaltung mit den Merkmalen des Anspruchs 1 gelöst. Vorteilhafte Ausgestaltungen sind in den Unteransprüchen enthalten.

Die Schaltung zur Umwandlung von Wechselspannung in Gleichspannung für mindestens einen Verbraucher enthält demnach folgende Bestandteile:
(a) Eine Wechselspannungseinspeisung mit zwei externen Anschlüssen (EA) und mindestens zwei internen Anschlüssen (IA). An die externen Anschlüsse können die Pole einer externen Wechselspannungsquelle angelegt werden, und an den internen Anschlüssen kann diese Wechselspannung nach einer eventuellen Umformung durch die Wechselspannungseinspeisung abgegriffen werden. Im einfachsten Falle findet in der Wechselspannungseinspeisung keine Umformung statt, und es ist jeder externe Anschluss direkt über eine Leitung mit je einem internen Anschluss verbunden. Es kann sich bei der Wechselspannungseinspeisung jedoch auch z.B. um einen Transformator handeln, wobei die beiden externen Anschlüsse die Anschlüsse der Primärwicklung des Transformators sind und wobei jede Sekundärwicklung des Transformators zwei interne Anschlüsse bereitstellt.
(b) Ein Gleichrichtermodul bekannter Bauart, dessen zwei Eingänge für die Zuleitung einer Wechselspannung jeweils mit einem internen Anschluss der Wechselspannungs-Einspeisung verbunden sind, und welches zwei Ausgangsleitungen aufweist, an die mindestens ein Verbraucher angeschlossen werden kann.
(c) Mindestens eine Induktionsspule, welche in einer der Verbindungsleitungen angeordnet ist, die die internen Anschlüsse der Wechselspannungseinspeisung mit dem Gleichrichtermodul verbinden. Die Induktionsspule hat die Aufgabe, den Nachladestrom abzuflachen bzw. den Oberwellenanteil des Nachladestroms zu reduzieren.

Die Schaltung ist dadurch gekennzeichnet, dass mindestens ein zweites Gleichrichtermodul vorhanden ist, dessen zwei Eingänge jeweils mit einem internen Anschluss der Wechselspannungseinspeisung verbunden sind und welches zwei Ausgangsleitungen für den Anschluss mindestens eines Verbrauchers aufweist.

In der erfindungsgemäßen Schaltung wird die als Wechselspannung von außen zugeführte Leistung über zwei getrennte Eingangspfade geleitet. Der eine Pfad führt dabei über das erste Gleichrichtermodul. In diesem Pfad befindet sich in bekannter Weise eine Induktionsspule, um eine Reduzierung des Oberwellenanteils des Nachladestroms zu bewirken. Daneben wird erfindungsgemäß ein zweiter Eingangspfad über das zweite Gleichrichtermodul eröffnet. Die hierdurch bei gleichbleibender Gesamtstromaufnahme eintretende Entlastung des ersten Eingangspfades kann dazu ausgenutzt werden, die in diesem Pfad befindliche Induktionsspule entsprechend kleiner auszulegen. Aufgrund des nichtlinearen Zusammenhanges zwischen Spulengröße und durchfließendem Strom I, der sich näherungsweise durch den Wert (L x I2 /2) für die Größe der Spule ausdrücken lässt, kommt es dabei zu einer Größenreduktion der Spule, insbesondere, weil die Induktivität kleiner werden kann. Auf diese Weise wird es möglich, Induktionsspulen mit drastisch reduzierter Größe zu verwenden, welche auch unter beengten Platzverhältnissen auf gedruckten Leiterplatten einsetzbar sind und Probleme mit der Stoßfestigkeit der Geräte vermeiden. Des weiteren wird die mit der erfindungsgemäßen Schaltung erzeugte Verlaufsform der Stromentnahme aus der Wechselspannungsquelle in vorteilhafter Weise verändert, so dass in einfacher Weise und mit reduziertem Aufwand Normvorschriften erfüllt werden können.

Die erfindungsgemäße Schaltung kann in verschiedener Weise ergänzt werden, um verbesserte Ausgangssignale zu erhalten. So können die beiden Ausgangsleitungen von mindestens einem Gleichrichtermodul, vorzugsweise von allen Gleichrichtermodulen, über je einen Glättungskondensator gekoppelt sein. Durch diesen Glättungskondensator erfolgt eine Unterdrückung höherer Frequenzen in der Ausgangsspannung.

Weiterhin kann in mindestens einer Ausgangsleitung von einem oder von allen Gleichrichtermodulen eine Diode angeordnet sein, um Stromfluss nur in einer Richtung zuzulassen.

Bei einer bevorzugten Ausgestaltung der Schaltung sind die Gleichrichtermodul-Ausgangsleitungen, welche gleiche Polarität aufweisen, miteinander verbunden. Dies bedeutet, dass die beiden Gleichrichtermodule parallel geschaltet sind, um einen anzuschließenden Verbraucher zu versorgen.

Wie bereits erwähnt kann die Wechselspannungseinspeisung im einfachsten Falle von durchgehenden Verbindungsleitungen zwischen je einem externen Anschluss und einem internen Anschluss gebildet werden, also keine Signalumformungbeinhalten. Alternativ kann sie jedoch auch durch einen Transformator gebildet werden, dessen Primärwicklungsenden die zwei externen Anschlüsse bilden und dessen Anschlüsse der - vorzugsweise zwei - Sekundärwicklungen vier interne Anschlüsse bilden.

Im Folgenden wird die Erfindung mit Hilfe der Figuren beispielhaft erläutert. Es zeigt:
- Fig. 1: eine Schaltung nach dem Stand der Technik zur Versorgung von zwei Verbrauchern;
- Fig. 2: eine Schaltung nach dem Stand der Technik zur Versorgung eines Verbrauchers;
- Fig 3: die bei einer Schaltung nach Figur 1 oder 2 eintretende Form der Stromentnahme;
- Fig 4: eine erste erfindungsgemäße Schaltung mit zwei Verbrauchern;
- Fig 5: die bei der Schaltung nach Figur 4 eintretende Form der Stromentnahme;
- Fig. 6: eine zweite erfindungsgemäße Schaltung mit einem Verbraucher;
- Fig 7: die für die Schaltung nach Figur 6 eintretende Form der Stromentnahme;
- Fig 8: eine dritte erfindungsgemäße Schaltung mit zwei Verbrauchern und einem eingangsseitigen Transformator;
- Fig 9: die für die Schaltung nach Figur 8 eintretende Form der Stromentnahme.

Die Erzeugung von Gleichspannungen zur Versorgung von elektronischen Endgeräten aus einer Wechselstrom-Netzspannung muss hinsichtlich der Umwandlung der Wechselspannung in Gleichspannung gewisse Mindestkriterien erfüllen. Für Verbraucher mit mehr als 75 W Leistungsaufnahme werden diese Anforderungen zum Beispiel in der Norm CEI/IEC 61000-3-2, SECOND EDITION, 2000-08 ausgedrückt. Verschiedene Verfahren zur Erfüllung dieser Norm sind bemüht, einen möglichst exakt sinusförmigen Eingangsstrom zu erzeugen. Eine derartige Sinusform ist von der Norm indes nicht zwingend vorgeschrieben.

Ein weit verbreitetes Verfahren zur Erfüllung von Qualitätsvorschriften besteht in einer passiven Lösung unter Verwendung einer sogenannten 50 Hz-Spule, welche den Eingangsstrom glättet. Dabei wird jedoch eine hohe Induktivität notwendig, um zum Beispiel die CEI/IEC 61000-3-2, SECOND EDITION, 2000-08 zu erfüllen. Die entsprechende Spule ist somit sehr groß und schwer, was Probleme bei ihrer Unterbringung auf einer gedruckten Platine sowie bei Stoßtests der Geräte verursacht. Mit der vorliegenden Erfindung wird eine Schaltung zur Verfügung gestellt, welche die Verwendung kleinerer Spulen bei gleichzeitiger Erfüllung von Qualitätsvorschriften für die Umwandlung ermöglicht.

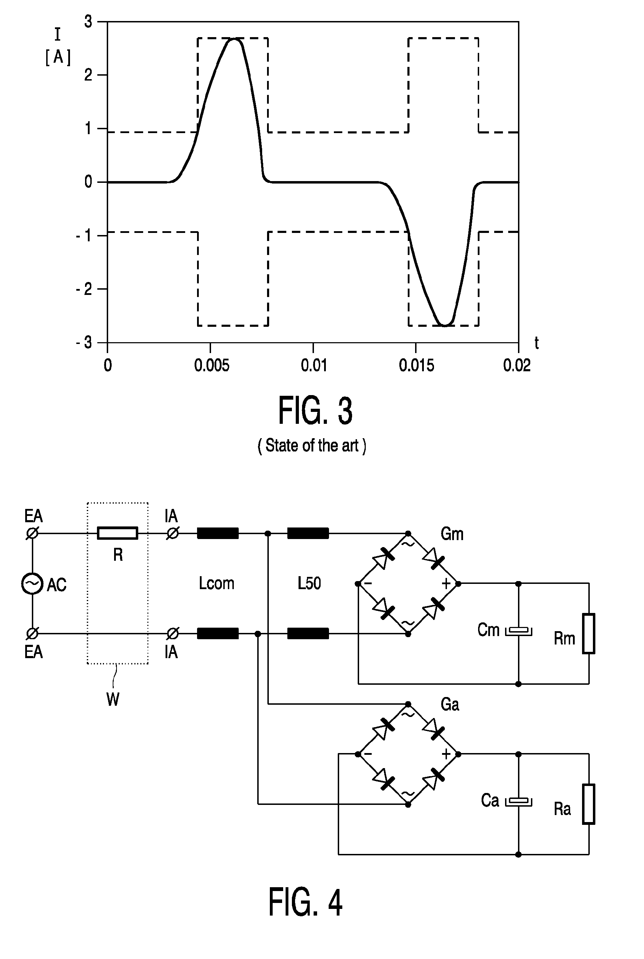

In der Norm CEI/IEC 61000-3-2, SECOND EDITION, 2000-08 werden Klassen A bis D unterschieden, wobei die Zugehörigkeit eines Gerätes zu einer Klasse von verschiedenen Merkmalen (zum Beispiel der Tragbarkeit des Gerätes) abhängt. Für viele Endgeräte wie z.B. TV-Geräte kommen im Wesentlichen die Klassen A und D in Betracht, wobei die Zugehörigkeit zu der einen oder anderen Klasse davon abhängt, ob die Signalform der Stromentnahme aus einer Wechselspannungsquelle zu mehr als 5% von einer in der Norm definierten Referenzkurve abweicht oder nicht. Die Referenzkurve ist in den Figuren 3, 5, 7 und 9 als gestrichelte Rechteckkurve eingetragen. Liegt die Signalform einer Stromentnahme zu mehr als 5% außerhalb der Referenzkurve, so fällt das Gerät in Klasse A In dieser Klasse bestehen großzügigere Grenzwerte für die im Signal noch zulässigen höheren Harmonischen.

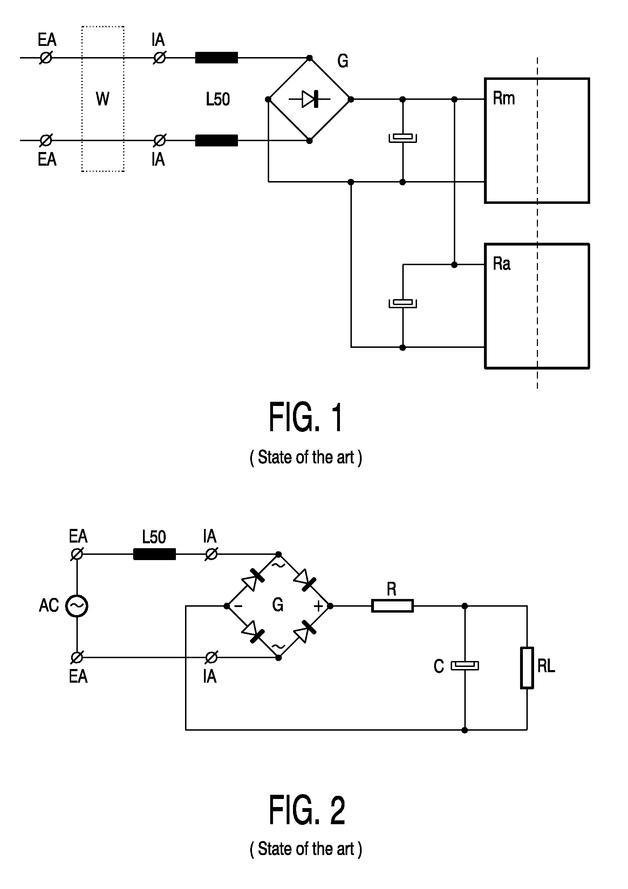

Figur 1 zeigt eine Schaltung nach dem Stand der Technik zur Versorgung zweier Verbraucher Rm, Ra mit Gleichspannung, die durch Umwandlung aus einer Wechselspannungsquelle gewonnen wird. Diese Schaltung entspricht derjenigen aus Figur 2, wobei die beiden Verbraucher Rm, Ra parallel an die Ausgänge des Gleichrichtermoduls G gehängt sind.

Figur 2 zeigt die bekannte Schaltung zur Versorgung eines Verbrauchers RL mit Gleichspannung genauer. Die Leistung wird einer Wechselspannungsquelle AC entnommen und durch ein Gleichrichtermodul G in eine ungeregelte oder schwankende (mit "ripple" behaftete) Gleichspannung umgewandelt. An den Eingangsanschlüssen des Gleichrichters G wird die Wechselspannung eingespeist. In einer der Eingangsleitungen oder in beiden Eingangsleitungen befindet sich dabei zur Glättung eine 50 Hz-Spule L50. An den Ausgangsanschlüssen "+", "-" des Gleichrichtermoduls G kann die Gleichspannung vom Verbraucher RL abgegriffen werden. Die beiden Ausgangsleitungen zu diesen Anschlüssen können über einen Glättungskondensator C gekoppelt sein. Ferner befindet sich häufig in einer Ausgangsleitung ein Widerstand R, um eine Begrenzung des Einschaltstroms zu erzielen.

Die mit einer Schaltung nach Figur 1 beziehungsweise nach Figur 2 resultierende Kurvenform der Stromentnahme ist in Figur 3 dargestellt, wobei der Schaltung folgende Parameter zugrunde liegen: R = 1.5 Ohm, L50 = 32 mH, C = 220 µF, Uin = 230 V, f = 50 Hz, Po =145 W. Die in Figur 3 ebenfalls eingetragene gestrichelte Linie entspricht der Referenzkurvenform der Norm CEI/IEC 61000-3-2, SECOND EDITION, 2000-08, anhand derer die Klassen A und D unterschieden werden. Da die dargestellte Signalform der Schaltungen nach den Figuren 1 und 2 innerhalb der Referenzkurvenform bleibt, muss sie gemäß der CEI/IEC 61000-3-2, SECOND EDITION, 2000-08 die Anforderungen der

### Klasse D erfüllen.

In Figur 4 ist eine erste erfindungsgemäße Schaltung zur Versorgung von zwei Verbrauchern Rm, Ra dargestellt. Bei dieser Schaltung gibt es zwei verschiedene Pfade, über welche Energie aus der Netzversorgung gezogen wird Der erste Pfad geht über das erste Gleichrichtermodul Gm (m = "main"), der zweite Pfad über das zweite Gleichrichtermodul Ga (a = "aux"). Nur der erste Pfad verläuft über die 50 Hz-Spule L50, während die Hilfsleistung für den zweiten Pfad vor der 50 Hz-Spule L50 entnommen wird. Im Eingang der Schaltung ist eine Wechselspannungseinspeisung W angedeutet mit zwei externen Anschlüssen EA für die Wechselspannungsquelle AC und zwei internen Anschlüssen IA für die Gleichrichtermodule Gm, Ga. In diesem Falle enthält die Wechselspannungs-Einspeisung nur einen Widerstand R, der den Eingangsstrom im Einschaltmoment begrenzt.

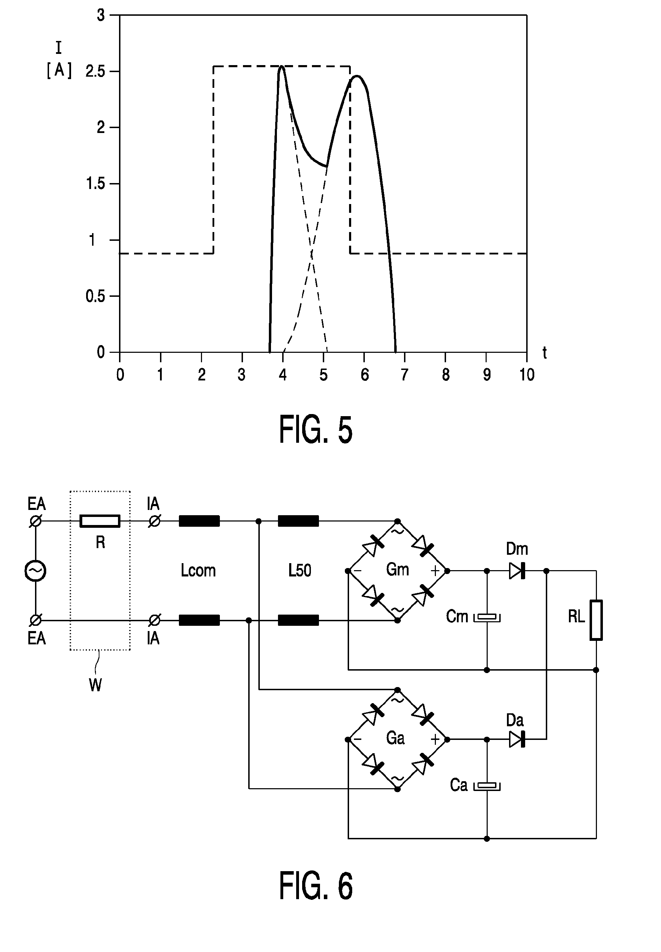

Figur 5 zeigt den resultierenden Signalverlauf der Stromentnahme (50 Hz Eingangsstrom, eine Halbwelle) bei Anwendung der Schaltung nach Figur 4. Die resultierende Kurvenform des Eingangsstroms (durchgezogene Linie) besteht aus zwei Teilen (gepunktete Linien für den Stromverlauf in den einzelnen Pfaden). Die Spitzen dieser beiden Teile treten zu verschiedenen Zeitpunkten auf, da der Wiederaufladungsimpuls für den zweiten Pfad über den Gleichrichter Ga nur durch die geringe Streu-Induktivität Lcom der Spule zur Unterdrückung für Gleichtaktstörungen begrenzt wird, während der Hauptwiederaufladungsimpuls durch die große 50 Hz-Spule L50 begrenzt wird.

In Abhängigkeit von den gewählten Leistungsniveaus und den Bauteilparametern ist es möglich, die Kurvenform in verschiedener Weise einzustellen. Bei der in Figur 5 dargestellten Kurvenform besteht eine mehr als 5%ige Abweichung von der gestrichelt dargestellten Referenzkurve nach Norm CEI/IEC 61000-3-2, SECOND EDITION, 2000-08, so dass deren Klasse A anwendbar ist.

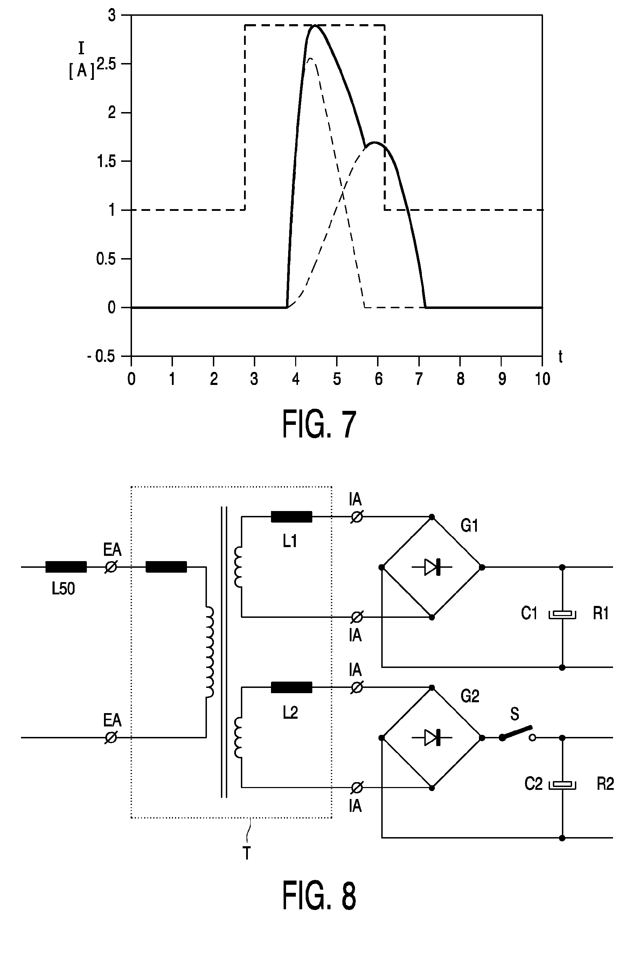

Figur 6 zeigt eine alternative Auslegung der erfindungsgemäßen Schaltung, bei welcher von zwei parallelen Strompfaden über die Gleichrichter Ga und Gm, die wie in Figur 4 ausgelegt sind ein einzelner Verbraucher RL betrieben wird Zu diesem Zweck sind die "+" Anschlüsse der beiden Gleichrichter Gm, Ga über die Dioden Dm, Da und die "-" Anschlüsse direkt miteinander gekoppelt. Figur 7 zeigt die sich bei dieser Schaltung einstellende Kurvenform des Eingangsstromes.

Eine dritte Variante der Schaltung ist in Figur 8 dargestellt. Bei dieser wird die Wechselspannung an den Anschlüssen der Primärwicklung des Transformators T eingespeist und an zwei Sekundärwicklungen des Transformators T entnommen. Der Transformator bildet somit anders als bei den Figuren 4 und 6 eine das Signal umformende Wechselspannungs-Einspeisung (gestrichelter Kasten). An den beiden Sekundärwicklungen hängen jeweils Gleichrichtermodule G1 und G2, in deren Eingangsleitungen jeweils Streuinduktivitäten L1 und L2 liegen. Gegebenenfalls kann auf der Primärseite des Transformators T noch eine L50 Drossel vorhanden sein. Ferner ist in einer Ausgangsleitung eines Gleichrichters G2 ein Schalter S angeordnet.

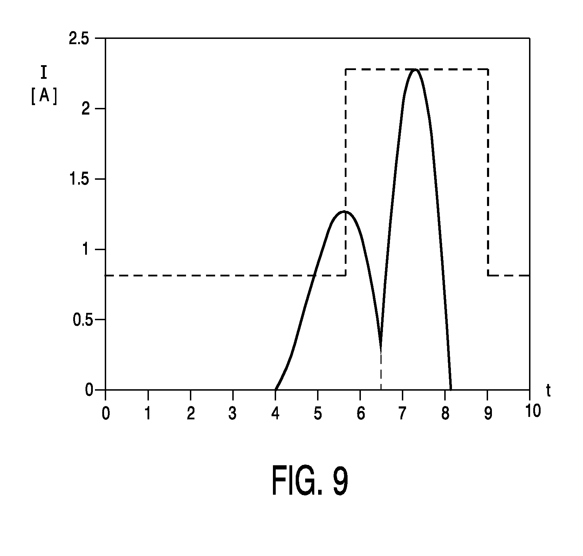

Die resultierende Kurvenform des Eingangsstromes wird in Figur 9 dargestellt. Die Schaltung ist etwas komplizierter, hat jedoch verschiedene Vorteile. Das zugrundeliegende Verfahren kann bei 50 Hz Transformatoren angewendet werden, welche heutzutage z.B. noch in Audioeinrichtungen eingesetzt werden. Ferner kann der Schalter S dazu verwendet werden, die Spannung über den zweiten Elektrolytenkondensator C2 in einem engeren Bereich zu halten. Dies führt wiederum speziell bei den oben erwähnten Audioeinrichtungen zu einer geringeren Leistungsdissipation in den nachgeschalteten linearen Reglern.

Natürlich kann das Prinzip auch in Systemen ohne einen 50 Hz Transformator verwendet werden, zum Beispiel in TV-Sets mit den oben beschriebenen Spezifikationen. Im Falle einer Hilfsversorgung kann der Schalter verwendet werden, um die maximale Elektrolytenkondensatorspannung auf einem Wert z.B. in der Nähe von 300 V zu begrenzen und hierdurch den Hilfs-Gleichstrom-zu-Gleichstrom-Konverter einfacher zu machen.

Bei allen Vorschlägen kann die Verwendung nichtlinearer Induktivitäten (d.h. Induktivität ist vom Strom abhängig) zur weiteren Reduzierung der Größe der magnetischen Komponenten verwendet werden.

### Bezugszeichenliste:

- AC: Wechselspannungsquelle
- C: Glättungskondensator
- Ca, C2: Kondensator im zweiten Eingangspfad
- Cm, C1: Kondensator im ersten Eingangspfad
- Dm, Da: Dioden im ersten/zweiten Eingangspfad
- EA: Externer Anschluss
- G: Gleichrichter
- Ga, G1: Gleichrichter im ersten Eingangspfad ("main")
- Gm, G2: Gleichrichter im zweiten Eingangspfad ("aux")
- I: Strom
- IA: Interner Anschluss
- L: Induktivität
- L50: 50 Hz-Spule
- Lcom: Streu-Induktivität der Spule zur Unterdrückung für Gleichtaktstörungen
- R: Ohmscher Widerstand
- RL: Verbraucher
- Rm, Ra: Verbraucher im ersten/zweiten Eingangspfad
- S: Schalter
- T: Transformator
- t: Zeit
- W: Wechselspannungseinspeisung

## Patentansprüche

1. Schaltung zur Umwandlung von Wechselspannung in Gleichspannung für mindestens einen Verbraucher, enthaltend
- eine Wechselspannungseinspeisung (W; T) mit zwei externen Anschlüssen (EA) und mindestens zwei internen Anschlüssen (IA),
- ein Gleichrichtermodul (Gm; G1), dessen zwei Eingänge mit je einem internen Anschluss der Wechselspannungseinspeisung verbunden sind und welches zwei Ausgangsleitungen mit Außenanschlüssen für die Ankopplung mindestens eines Verbrauchers (Rm; RL; R1) aufweist,
- mindestens eine in einer der Verbindungsleitungen zwischen den internen Anschlüssen der Wechselspannungseinspeisung und dem Gleichrichtermodul (Gm) angeordnete Induktionsspule (L50; L1, L2)
**dadurch gekennzeichnet,**
**dass** mindestens ein zweites Gleichrichtermodul (Ga; G2) vorhanden ist, dessen zwei Eingänge mit je einem internen Anschluss der Wechselspannungseinspeisung verbunden sind und welches zwei Ausgangsleitungen für den Anschluss mindestens eines Verbrauchers (Ra; RL; R2) aufweist.

2. Schaltung nach Anspruch 1,
**dadurch gekennzeichnet,**
**dass** die Ausgangsleitungen mindestens eines der Gleichrichtermodule (Gm, Ga; G1, G2) über einen Glättungskondensator (Cm, Ca; C1; C2) gekoppelt sind

3. Schaltung nach einem der Ansprüche 1 oder 2,
**dadurch gekennzeichnet,**
**dass** in mindestens einer Ausgangsleitung eines Gleichrichtermoduls (Gm, Ga) eine Diode (Dm, Da) angeordnet ist.

4. Schaltung nach mindestens einem der Ansprüche 1 bis 3,
**dadurch gekennzeichnet, dass** die Ausgangsleitungen gleicher Polarität der Gleichrichtermodule (Gm, Ga) verbunden sind, wobei die Verbindung vorzugsweise über Dioden (Dm, Da) erfolgt.

5. Schaltung nach mindestens einem der Ansprüche 1 bis 4,
**dadurch gekennzeichnet, dass** die Wechselspannungseinspeisung (W) aus einer Durchgangsverbindung zwischen zwei internen Anschlüssen (IA) und zwei entsprechenden externen Anschlüssen (EA) besteht.

6. Schaltung nach mindestens einem der Ansprüche 1 bis 5,
**dadurch gekennzeichnet, dass** die Wechselspannungseinspeisung durch einen Transformator (T) gebildet wird, dessen Primärwicklungsanschlüsse die zwei externen Anschlüsse (EA) bilden, und der mindestens zwei Sekundärwicklungen aufweist, deren Enden vier interne Anschlüsse (IA) bilden.

7. Schaltung nach Anspruch 6,
**dadurch gekennzeichnet, dass** in der Verbindungsleitung zwischen dem zweiten Gleichrichtermodul (G2) und dem zugehörigen internen Anschluss des Transformators (T) eine Induktionsspule (L2) angeordnet ist.

8. Schaltung nach Anspruch 6,
**dadurch gekennzeichnet,**
**dass** die in einer der Verbindungsleitungen zwischen den internen Anschlüssen (IA) der Wechselspannungseinspeisung und dem Gleichrichtermodul (G1) angeordnete Induktionsspule durch Streuinduktivitäten (L1, L2) gebildet wird.

9. Schaltung nach mindestens einem der Ansprüche 1 bis 8,
**dadurch gekennzeichnet,**
**dass** in einer Ausgangsleitung des zweiten Gleichrichtermoduls (Ga, G2) ein Schalter (S) angeordnet ist.
